# EUROPEAN PATENT APPLICATION

(11) **EP 4 641 384 A1**
(43) Date of publication of application: **29.10.2025**
(21) Application number: 25164246.8
(22) Date of filing: 17.03.2025
(51) Int. Cl.: G06F 9/50

(54) **APPARATUS AND METHOD**

(30) Priority: 27.03.2024 US 202418617682
(71) Applicant: INTEL Corporation, Santa Clara, CA 95054 (US)
(72) Inventor: SRIKANTHAN, Sharanyan, Portland, 97229 (US); KUMAR, Karthik, Chandler, 85249 (US); GUIM BERNAT, Francesc, 08036 Barcelona (ES); POORNACHANDRAN, Rajesh, Portland, 97229 (US); CARRANZA, Marcos, Portland, 97229 (US)
(74) Representative: 2SPL Patentanwälte PartG mbB

(57) **Abstract**

It is provided an apparatus comprising interface circuitry, machine-readable instructions, and processing circuitry to execute the machine-readable instructions. The machine-readable instructions comprise instructions to identify a processing flow pattern of a large language model, LLM, wherein the LLM is executed on a processor circuitry comprising a plurality of processor cores and wherein the processing flow pattern comprising a plurality of processing phases. The machine-readable instructions further comprise instructions to identify a processing phase of the LLM from the processing flow pattern. The machine-readable instructions further comprise instructions to allocate processing resources to the processor circuitry based on the identified processing phase of the LLM.

## Description

### Background

With the increasing use and popularity of Large Language Models (LLMs), there is a growing demand for robust processing platforms designed to handle their complex operations. This need poses a challenge to existing processing infrastructures, necessitating a re-evaluation of their efficiency in facilitating LLM-driven inference tasks. For example, inefficiencies within power allocation mechanisms, where resources are misallocated or underutilized, may hinder the seamless execution of LLM operations. These inefficiencies not only affect the performance of LLMs, but also cause unnecessary costs and waste of resources. Therefore, there may be a desire to improve processing platforms to increase the performance of LLMs.

### Brief description of the Figures

Some examples of apparatuses and/or methods will be described in the following by way of example only, and with reference to the accompanying figures, in which
Fig. 1 illustrates a block diagram of an example of an apparatus;
Fig. 2 illustrates a first token latency performance of an LLM executed by a processor circuitry with a different number of last level cache (LLC) ways;
Fig. 3 illustrates the average token latency performance of the LLM executed by the processor circuitry with a different number of LLC ways for a batch size of 1;
Fig. 4 illustrates the average token latency performance of the LLM executed by the processor circuitry with a different number of LLC ways for a batch size of 8;
Fig. 5 illustrates power expenditure of an LLM;
Fig. 6 illustrates a block diagram of an example of the proposed technique; and
Fig. 7 illustrates a flowchart of an example of a method 700.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

In the realm of LLMs, the time consumed to generate words and sentences by the LLM, that is workloads executed by the LLM during inference phase, may broadly be categorized in two groups: 1. The time needed to generate the first token, which is the time for the LLM to return the first token (for instance the first word that ChatGPT would reply with). This may be referred to as first token latency. 2. The average time needed to return all subsequent words by the LLM, for example the remainder of the sentence returned by a ChatGPT prompt. This may be referred to as average token latency.

For example, a typical performance or Service Level Agreement (SLA) guideline for the first token latency may be the order of 1 second or the like. For example, a typical performance for the average token latency may be 50 milliseconds or the like. These performance expectations or SLA guidelines may be based on end user tolerance in perceiving an LLM to not be slow while responding.

Therefore, the performance of an LLM may be analyzed with regards to different hardware settings of the processor platform executing the LLM. For example, the performance of different LLMs may be analyzed such as transformer based LLMs, such as GPT based models (GPT-J, ChatGLM or ChatGPT or the like) or Llama by Facebook ^{®} or the like.

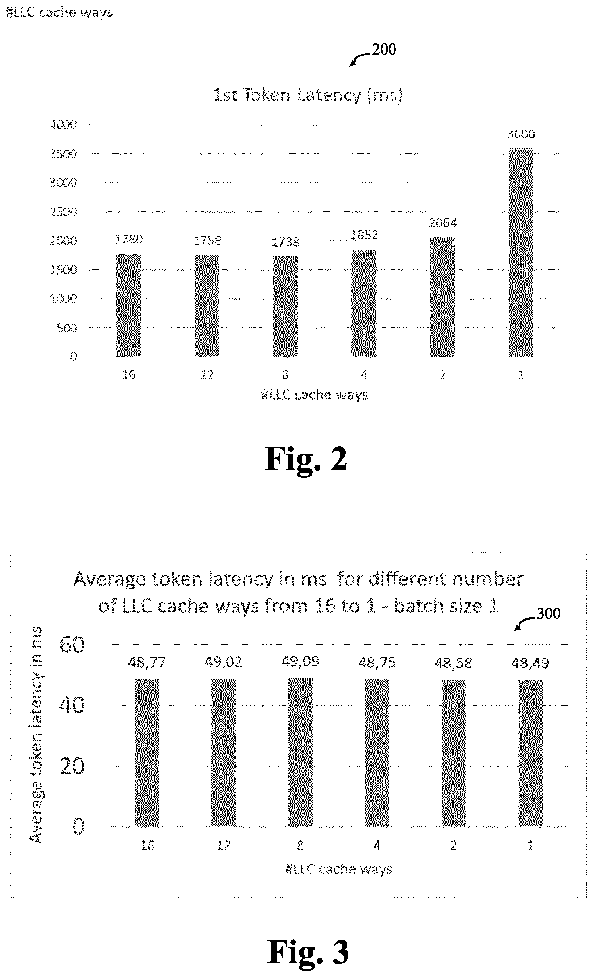

For example, the first token latency performance may be moderately sensitive to CPU cache size but may be in general compute bound. The sensitivity of the first token performance of an LLM (for example Llama) to last level cache (LLC) size may low. For example, when reducing the number of cache ways (a cache way may refer to one of the multiple slots in a cache set where data can be stored) from 16 down to 8 no impact on performance may be observable. Further reductions in the number of cache ways to 4, and 2 ways may produce little performance impacts. A significant performance impact may only appear when reducing the cache way down to 1 (see also Fig. 2).

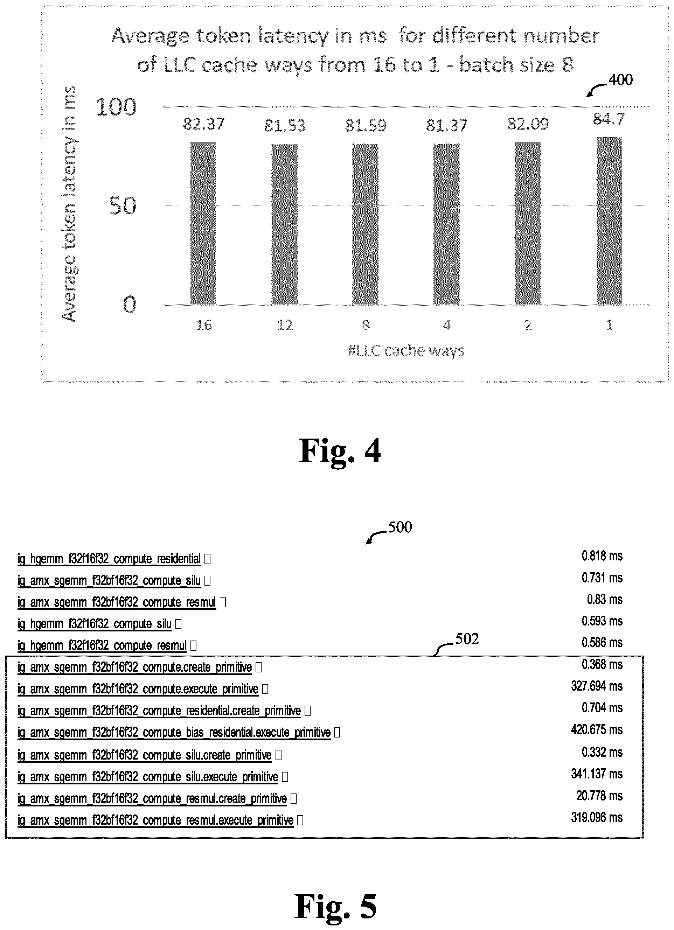

In another example, the average token latency performance of an LLM (for example Llama) may be completely insensitive to CPU cache size. The average token latency performance of an LLM may be mainly memory bandwidth bound. For example, the average token latency may vary with batch size of the input, however it is insensitive to LLC cache size (LLC ways). For example, average token latency may be basically identical when varying the LLC way between 1 and 16 (see Figs. 3 and 4).

However, it may be observed that a significant amount of processing time when executing an LLM may be spent due to threads waiting on data. In some examples, around 40% of time may be spent due to synchronization, with most cores just being parked in halted state. Further, a lot of the code and compute power when executing an LLM may be spent carrying out specific types of instruction set extensions (ISAs) (for example, Advanced Matrix Extensions (AMX)) (see also Fig. 5).

For example, if a (processing resource) bottleneck during executing an LLM is memory bandwidth, or thread imbalance (i.e., threads waiting), then expending processing platform power executing specific ISAs (such as AMX instructions) or to power LLC ways may be wasteful. For example, redirecting power of the processing platform to execute straggler threads' processor cores at a higher speed. In another example, uncore components such as a processor interconnect controller (such as Core Home Agent (CHA)), a memory controller speed, and/or an IO die speed (in cases where Compute Express Link (CXL) is used for bandwidth expansion) may be improved.

Previous approaches, such as specific Model-Specific Registers (such as MSR 0xd10) may scale cache ways, however these techniques are not able to power down cache and save power or to specify to the processing platform when and how to redirect platform power. There are no APIs available to speed up (for instance software-guided) selective sections of uncore processor interconnect controller (such as CHAs) and/or memory controllers which may a bottlenecked (for example LLM workloads may be notoriously bursty). Therefore, it may be desirable to improve a LLM imbalances and improve a load balancer to be LLM-bottleneck-aware in order to speed up a group of threads that are processing a token, for example specifically stragglers within that group of threads.

In the present disclosure it is disclosed an apparatus and a method (for example intelligence into a software stack) which provides improved resource adaptation based on the type of the LLM (i.e., LLM signatures).

Despite the source code for first token and the rest of token is different, they share a set of important routines (core routines) that may be common for all the tokens. One aspect of the present disclosure is that different binary compilations may be used for these important routines of the LLM that are utilized for different the token processing. The compiler generates these different binary compilations for the core routines of the LLM that are utilized for the token processing.

Another aspect of the present disclosure is that the computing system is expanded with a new observability and resource management feature that is designed to optimize power and resource distribution across the various resources based on a learning that it is performed over time to identify different processing phases. In this context for different areas are addressed. For example, a smart power and resource distribution based on specific LLM processing phases may be performed. Further, a resource load balancing for threads belonging to the same token processing may be performed. Further, an ISA selection based on the signature of the LLM, and a processing phase may be performed.

The present disclosure provides a technique where the above mentioned aspects may be performed in a multi-tenant and/or multi-model environment. The present disclosure provides a technique which may be applicable to a wide range of APIs so the application may notify the proper mapping of software resources to hardware resources (for example provide a mapping of software threads to Token ID).

LLMs may have unique characteristics including computation of multiple tokens based on user input, and user interactivity, a per-token computation latency SLA for the first token, and a different SLA for rest of the tokens, and within each token, a set of operations with markedly distinct characteristics. For example, each token computation has a bandwidth intensive phase, followed by an all reduce phase with data sharing. There is a marked shifting of phases, in a manner that is observable not but not predictable a-priori as it depends on user input, and user interactivity. Given the SLAs for each token completion, it is possible to track time to completion at a very fine granularity and apply policy changes to optimize the same. The proposed technique and apparatus and method unique to LLM requirements as the per-token SLA optimizations, such as ensuring threads on multiple cores have sufficient resources (core/uncore speeds, cache) to reach all reduce at the same time depend heavily on the LLM model, choice of precision/embeddings, and the nature of the user query. Further the proposed technique proposes an apparatus and circuitry that is uniquely tailored to LLM per token user SLAs and LLM behaviors (model choice, model complexity, per-token model all reduce patterns etc.).

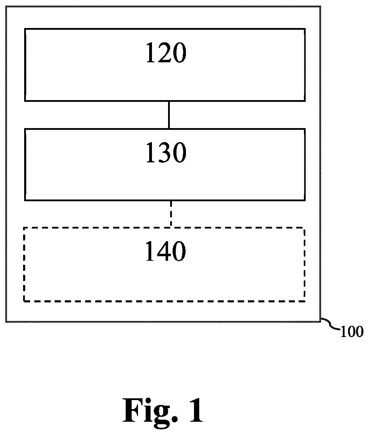

**Fig. 1** illustrates a block diagram of an example of an apparatus 100 or device 100. The apparatus 100 comprises circuitry that is configured to provide the functionality of the apparatus 100. For example, the apparatus 100 of Fig. 1 comprises interface circuitry 120, processor circuitry 130 and (optional) storage circuitry 140. For example, the processor circuitry 130 may be coupled with the interface circuitry 120 and optionally with the storage circuitry 140.

For example, the processor circuitry 130 may be configured to provide the functionality of the apparatus 100, in conjunction with the interface circuitry 120. For example, the interface circuitry 120 is configured to exchange information, e.g., with other components inside or outside the apparatus 100 and the storage circuitry 140. Likewise, the device 100 may comprise means that is/are configured to provide the functionality of the device 100.

The components of the device 100 are defined as component means, which may correspond to, or implemented by, the respective structural components of the apparatus 100. For example, the device 100 of Fig. 1a comprises means for processing 130, which may correspond to or be implemented by the processor circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

In general, the functionality of the processor circuitry 130 or means for processing 130 may be implemented by the processor circuitry 130 or means for processing 130 executing machine-readable instructions. Accordingly, any feature ascribed to the processor circuitry 130 or means for processing 130 may be defined by one or more instructions of a plurality of machine-readable instructions. The apparatus 100 or device 100 may comprise the machine-readable instructions, e.g., within the storage circuitry 140 or means for storing information 140.

The interface circuitry 120 or means for communicating 120 may correspond to one or more inputs and/or outputs for receiving and/or transmitting information, which may be in digital (bit) values according to a specified code, within a module, between modules or between modules of different entities. For example, the interface circuitry 120 or means for communicating 120 may comprise circuitry configured to receive and/or transmit information.

For example, the processor circuitry 130 or means for processing 130 may be implemented using one or more processing units, one or more processing devices, any means for processing, such as a processor, a computer or a programmable hardware component being operable with accordingly adapted software. In other words, the described function of the processor circuitry 130 or means for processing 130 may as well be implemented in software, which is then executed on one or more programmable hardware components. Such hardware components may comprise a general-purpose processor, a Digital Signal Processor (DSP), a micro-controller, etc.

For example, the storage circuitry 140 or means for storing information 140 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage. For example, the storage circuitry 140 may store a (UEFI) BIOS.

The circuitry 130 is configured to identify a processing flow pattern of a large language model (LLM). The LLM is executed on a processor circuitry comprising a plurality of processor cores. In some examples, the processor circuitry 130 may be the same processor circuitry that is executing the LLM. In another example, the processor circuitry 130 and the processor circuitry that is executing the LLM are different, and they may communicate, for example, via the interface circuitry 130.

The processor circuitry that is executing the LLM (and in some examples also the processor circuitry 130) may comprise several components such as a plurality of processor cores. Further, the processor circuitry may comprise uncore components which provide support functions to the processor core(s). The uncore components may comprise memory controllers, responsible for managing data transfer between the processor and system memory, ensuring efficient access to instructions and data. The uncore components may comprise a cache hierarchy, which may include shared caches like the last-level cache (LLC), accelerates data access by storing frequently used information close to the cores, reducing latency and improving performance. Further, uncore components may comprise interconnects such as system buses or on-chip pathways which facilitate communication between processor cores, memory controllers, and other components, ensuring smooth data exchange within the processor. Further, uncore components may comprise integrated graphics processing units (GPUs) within the uncore components offer accelerated graphical capabilities alongside processor tasks, enhancing overall system versatility. Further, uncore components may comprise power management units which regulate power consumption and optimize performance based on workload demands, contributing to energy efficiency and system stability.

An LLM may be a computational framework designed to parse, interpret, and produce human language, utilizing extensive datasets and intricate neural network architectures for large-scale language processing tasks. There are different types of LLMs and different implementations of the different types. For example, types of LLMs are transformer models, recurrent neural networks (RNNs), and convolutional neural networks (CNNs). Transformer models (such as implementations BERT and GPT) leverage self-attention mechanisms to analyze and generate text, effectively capturing contextual relationships within language. RNNs, exemplified by models like LSTM (Long Short-Term Memory), are adept at handling sequences of data, making them suitable for tasks where context from earlier in the sequence is vital. CNNs, though primarily associated with image processing, have been adapted for NLP tasks such as sentence classification, using layers to recognize patterns in text data.

Executing a LLM may refer to the model being operational, actively processing input to generate output, that is (output) tokens. For example, the LLM may generate a series of tokens. A token may be a piece of text, a word and/or a part of a word or the like generated by the LLM. For example, the LLM receives an input (also referred to as prompt), converts it into an initial sequence of (input) tokens, and then sequentially generates the output tokens. This process may be guided by the model's neural network architecture, which predicts each subsequent output token based on the accumulated context of the previously generated tokens, thereby constructing a coherent text output. The execution may continue until the model fulfills the task's requirements, reaching a stopping condition such as a maximum token limit or a logical end of the text sequence.

The processing flow pattern may comprise a plurality of processing phases. The processing flow pattern of the LLM may refer to the characteristic sequence of operations (processing phases) that the processor circuitry undergoes to process the LLM input and generate the LLM output (i.e., the output tokens). The processing flow pattern may be distinct for different types and/or implementations of LLMs, influenced by the underlying LLM architecture, design, and the specific tasks the LLMs are performing. In other words, the processing flow pattern may be defined by the sequence of its processing phases.

The processing phases may refer to a temporally delimited segment of the execution of the LLM by the processor circuitry, which may be defined by a specific utilization of processing resources and/or specific utilization of hardware and software components of the processor circuitry and/or the computing system (comprising the processor circuitry) during that segment. For example, the software components of the processor circuitry may be different ISAs, misses per kilo instructions. For example, the hardware components of the processor circuitry be the processor cores or the uncore components as described above and/or specialized hardware accelerators dedicated to optimizing computational tasks, core utilization. Processing resources may comprise power, memory access, bandwidth or the like (see below). For example, the processing phases may be determined based on a duration and/or processing resources utilization. In other words, the identified processing phase gives the circuitry 130 information about performance bottlenecks, such as bandwidth bottlenecks, imbalances and other issues slowing execution of the LLM and deteriorating the performance that appear during said processing phase.

For example, a processing phase may be a processing phase of generating a first token by the LLM. Another processing phase may be a processing phase of generating a second token by the LLM and/or the generating of the all the rest tokens beside the first token. For example, a processing phase may be a reduce all operation/phase. The reduce all operation may be a processing phase or the reduce all operation may be part of one of the above mentioned processing phases. The reduce all phase the context of executing the LLM may be processing phase where the LLM's distributed components synchronize. During this phase, data from all nodes or processor cores involved in the LLM's operation are aggregated (reduced) and then distributed (all) back to each node. The reduce all operation/phase utilize network bandwidth and processing power to synchronize the information across the system. For example, a processing phase may be a processing phase with a memory bandwidth exceeding a predefined threshold. This may be referred to as a memory bandwidth intensive processing phase. For example, the threshold is above the 80^{th} or 90^{th} percentile of available memory bandwidth. For example, a processing phase may be a processing phase of data sharing among processor cores or other components. Bandwidth in this regard may refer to the capacity for data transfer within between the processor cores, its caches, system memory (RAM), and/or input/output devices.

Further, the processor circuitry 130 is configured to identify a processing phase of the LLM from the processing flow pattern. In some examples, the processor circuitry 130 may identify the current processing phase (for example before it starts or at the beginning of the processing phase). In some examples, the processor circuitry 130 may identify a future processing phase, for example, the subsequent processing phase. Therefore, in some examples, the processor circuitry 130 obtains information about performance bottlenecks, such as bandwidth bottlenecks, imbalances and other issues slowing execution of the LLM and deteriorating the performance that are appearing or will appear during the identified current and/or future processing phase(s). In some examples, the processor circuitry 130 predicts information about performance bottlenecks, such as bandwidth bottlenecks, imbalances and other issues slowing execution of the LLM and deteriorating the performance that will appear during the identified current and/or future processing phase(s).

For example, the processing circuitry 130 may identify the processing flow pattern of the LLM and may therefore identify some or all current and/or future processing phases (and their corresponding performance bottlenecks) included in the that processing flow pattern in advance. For example, the processor circuitry 130 may monitor the specific processing resources that are utilized in order to identify the current processing phase and/or identify if a processing phase ends or a new processing phase starts. For example, the processor circuitry 130 may monitor the specific processing resources that are utilized and may therefore identify the processing flow pattern comprising the processing phases. In some examples, the circuitry 130 may obtain a signature corresponding to the type and/or implementation of the LLM that is executed wherein the signature signifies the processing flow patterns of the LLM and corresponding processing phases. In some examples, the circuitry 130 may generate and may be store a signature corresponding to the type and/or implementation of the LLM that is executed wherein the signature signifies the current processing flow pattern and corresponding processing phases (see below). Therefore, after the circuitry 130 identifies the current processing phase it also knows the following processing phases.

Further, processing circuitry 130 is configured to allocate processing resources to the processor circuitry based on the identified processing phase of the LLM. By identifying a current and/or future processing phase the circuitry 130 obtains information about performance bottlenecks (such as bandwidth bottlenecks, imbalances and other issues slowing execution of the LLM and deteriorating the performance) of the current and/ or future processing phase.

Therefore, in some examples the processing circuitry 130 allocates processing resources in order to prevent such performance bottlenecks in current and/or future processing phase from occurring. In other examples, the processing circuitry 130 allocates processing resources to mitigate already present performance bottlenecks or prevent predicted performance bottlenecks. Since the processing phase and its specific performance bottlenecks have been identified, also the mitigation of present performance bottlenecks may be applied more accurate and faster because the potential for bottlenecks are already known and processing resources re-allocation suggestions are already known and established.

For example, processing resources may refer to the finite resources available within a computing system and/or to a processor circuitry, essential for its operational functionality and to execute the LLM. The processing resources comprise power, bandwidth between the components of the processor circuitry and the computing system, computational capacity, memory capacity, storage capacity, cache capacity, and I/O bandwidth or the like. For instance, the operation of the hardware and/or software components of the computing system and/or to a processor circuitry during execution of the LLM may require a different amount of the available processing resources.

Within the computing system (comprising the processor circuity executing the LLM), there exist various software and hardware components, each utilizing the processing resources in distinct ways. Software components like the Instruction Set Architectures (ISAs) impose different demands on resources such as power and bandwidth, depending on their complexity and the operations they facilitate. Processor cores may consume varying amounts of power based on their processing speeds and computational loads. Memory controllers, used for data transfer and management, consuming power for tasks like buffering and address translation. Cache hierarchies utilize both power and memory resources to optimize data access and reduce latency. Interconnects facilitate communication between components, utilizing bandwidth for efficient data exchange.

The allocating of the processing resources may involve distributing said processing resources among various hardware/software components and/or tasks and processes to optimize the overall efficiency and performance of the computing system executing the LLM. The allocating of the processing resources may be a dynamic process including a re-allocation of processing resources from less critical components and/or tasks to more demanding ones to ensure optimal utilization of the execution of the LLM. In other words, based on the current processing phase of executing the LLM (and in some examples also on the processing flow pattern of the executing LLM) the processing resources are allocated and/or re-allocated to improve the execution of the current processing phase of the LLM and the overall execution of the LLM. That is the processing resources are allocated to mitigate already present performance bottlenecks in the current processing phase. Further, processing resources may be allocated in order to prevent performance bottlenecks in current and/or future processing phase from occurring.

For example, as also described above and below (see also Figs. 2 - 5), processing resource bottlenecks, such as a memory bandwidth bottleneck and/or thread imbalance and/or synchronization issues take up a significant amount of time during execution of the LLM, where they appear. Therefore, allocation processing resources to reduce these issues and thereby speeding up threads (for example threads that are processing a specific token and/or speeding up specifically stragglers within that group of threads) speeds up the execution of the LLM. For example, resources may be withdrawn from power intensive components and operations which may have little benefit at the current processing phase, like specific power intensive ISAs or the like.

In some examples, the circuitry 130 applies specific processing resource allocation schemes (also referred to as policies). For example, the circuitry 130 may allocate the processing resources via existing mechanism (such as Resource Director Technology (RDT), and Performance Monitoring Unit (PMU)).

Therefore, the technique of the present disclosure provides improved resource allocation and improve and faster execution of the LLM based on the identified processing phase and/or based on the type of the LLM.

In some examples processor circuitry 130 is configured to identify one or more processor cores of the plurality of processor cores executing one or more threads. The one or more threads are associated with a particular token generated by the LLM.

A thread may refer to a single sequence of executable instructions that can be managed independently by a scheduler, which is part of the operating system. Each thread may be mapped to a processor core of the processor circuitry which is executing it. That is thread is assigned to a specific processor core for execution, allowing for concurrent processing of multiple threads across different cores. During LLM execution, different threads (and thus different processor cores) may execute a particular token. The circuitry 130 is configured to identify all the processor cores of the processor circuitry that execute a thread that is associated with the same token generated by the LLM. For example, the LLM will provide this information to the processor.

For example, the processor circuitry 130 may monitor and manage the execution of threads across processor cores by profiling tools (e.g., VTune, gprof etc.) that provide insights into processor circuitry and thread utilization, concurrency libraries to manage thread distribution, and operating system-specific monitoring tools for real-time processor circuitry activity observation.

In some examples, processor cores of the same processor circuitry may execute distinct tokens of either the same or a different LLM. For example, a plurality of users (multi-tenant) may call the same or different LLMs (multi-model) to execute on the same processor circuitry, wherein one ore processor cores may be provided for each of the plurality of LLM executions. This may be referred to as a multi-tenant and/or multi-model.

In some examples, the circuitry 130 is further configured to re-allocate processing resources to the identified one or more processor cores to balance a progress of the one or more threads.

A thread imbalance may refer to a situation where threads within a multi-threaded application, such as executing the LLM, do not progress at a uniform rate. Some threads might be waiting (so called straggler threads) while others are actively executing, leading to an uneven workload distribution across processor cores of the processor circuitry. In some examples, thread imbalances may be exacerbated by memory bandwidth bottlenecks. A memory bandwidth bottleneck may refer to processor core of the processor circuitry being waiting for data to be transferred to or from memory because the memory subsystem can't keep up with the demand. This may slow down the execution of the LLM. For example, if some threads are reliant on memory access while others are not, those requiring significant memory access may stall, waiting for data to be fetched or written. This may generate or worsen thread imbalances as some cores may be underutilized while others are overloaded. In some examples, thread imbalances may stem from threads waiting data from other threads of workload being not evenly distributed among threads, or some threads being dependent on synchronization primitives (like locks or semaphores) and end up waiting on others.

In some examples, a group of threads associated to a token may be accelerated, for example in order to reach an SLA goal of first token or average token latency. In another example, straggling threads within a group of threads which are processing a specific token are accelerated. For example, one or more threads may be accelerated by allocating more computational resources, such as increasing the clock speed or providing more power to the corresponding processor core, enhancing its execution efficiency and speed. For example, resources may be withdrawn from other power intensive components and operations (which may have little benefit at the current processing phase, like specific power intensive ISAs or the like) to make the free for applying them to said processor cores. Because thread imbalance and/or synchronization issues take up a significant amount of time during execution of the LLM, improved thread balance highly improves the execution speed and performance of the LLM.

In some examples, the processor circuitry 130 may be further configured to switch an instruction set architecture (ISA) based on the identified processing phase of the LLM.

Different ISAs may have varying resource demands, such as bandwidth and power, due to their specialized operations. Therefore, in case that a processing resource bottleneck, for instance a memory bandwidth bottleneck is present expending power executing power and bandwidth intensive ISAs is sub-optimal resource allocation. For example, in case of a bandwidth bottleneck, Advanced Matrix Extensions (AMX) ISA or Advanced Vector Extensions-512 (AVX-512) may be adaptively turned off based on the identified processing phase because it does not bring no additional benefit in that phase and the power is instead allocated to improve the bandwidth bottleneck. For example, the compiler may be adapted such that the compiler may generate binaries with exposed synchronization points at which alternate execution paths with switched ISAs may be pursued. For example, if the decision from processor circuitry is to switch from AVX-512 to AVX2 ISA, this alternate execution path needs to be pursued from a given synchronization point.

In some examples, the processor circuitry 130 is configured to re-allocate processing resources with regards to one or more processor cores of the processor circuitry, a memory controller of the processor circuitry, a cache of processor circuitry and/or an I/O die of the processor circuitry based on the identified processing phase. In other words, based on the identified processing phase, which gives information about performance bottlenecks, processing resources may be applied or withdrawn to any or from any of the mentioned components in order to mitigate the identified present performance bottlenecks or prevent predicted performance bottlenecks.

As described above, re-allocating additional power the processor cores, their computational capabilities are enhanced, resulting in accelerated execution of tasks. This increased resource allocation allows the cores to process instructions more rapidly, reducing the time taken to complete computations and improving overall system responsiveness.

For example, the IO (Input/Output) die may be responsible for managing the data flow between the processor core(s) and external environment, including peripherals and memory etc. When coupled with Compute Express Link (CXL), an advanced interconnect standard designed to facilitate high-speed, efficient communication between the processor circuitry, memory devices, and accelerators, the potential for bandwidth expansion is significantly enhanced. By effectively managing and optimizing power allocation to the IO die, for example in systems utilizing CXL, the operational efficiency and data transfer rates may be improved. This optimization may involve increasing the clock speeds or enabling additional resources within the IO die, which, in turn, requires a greater allocation of the processor's overall power budget. When more power is applied to the IO die, it may process data more rapidly and handle larger volumes of data transfers, thus alleviating bandwidth bottlenecks.

A cache management component (such as CHA) may be responsible for cache coherence and facilitating core-cache communication, alongside the memory controller, which may manage data flow between the processor circuitry and memory (such as RAM). Bandwidth bottlenecks may arise when these components cannot keep up with the data transfer demands, causing delays and underutilization of processor cores. By re-allocating power to the cache management component and memory controller, their operational capabilities are bolstered, resulting in accelerated cache management and memory access processes. This re-allocation of power leads to more efficient handling of data, diminishing the wait times experienced by processor cores, and refining the overall performance of the system. Consequently, this tackles the challenges associated with memory bandwidth constraints.

In some examples, the processing circuitry 130 is configured to turn off at least a portion of cache of the processor circuitry based on the identified processing phase of the LLM. The cache of the processor circuitry may comprise different levels of cache such as L1, L2, L3, L4 (L3 and/or L4 is also referred to as last level cache, LLC). In some examples, one or more or all cache levels are turned off based on the identified processing phase of the LLM. In some examples, one or more processor core of the processor circuitry is associated with their own cache. In some examples, parts or all of the cache associated to specific processor cores may be turned off. For example, parts or all of the cache associated with the processor core of the processor circuitry which are executing threads of a specific token may be turned off. Turning off a cache, or a cache level or parts of a cache may refer to ensuring that all dirty cache lines (data that is modified) in the corresponding region stop writing to memory or some other level in the cache hierarchy.

Therefore, turning off parts or all of the cache during processing phases that don't benefit from repetitive data access may be beneficial because the cache may not provide significant performance improvements the processing resources are re-allocated. In some examples cache ways are individual blocks within a set in a set-associative cache, where each set consists of multiple ways that can store data. They may be powered down or powered off or put into a low-power state during processing phases of low cache utilization or when certain data blocks are not frequently accessed, thereby saving processing resources such as power. The power may be real-located to power resources to other components or tasks that need them more urgently such as processor cores to speed up straggler threads.

In some examples, the processor circuitry 130 is configured to infer the processing flow pattern of the LLM based on processing resource utilization. For example, the processing flow pattern of the LLM is inferred based on memory bandwidth usage of the processor circuitry, processor core utilization of the processor circuitry and/or a number of caches misses the processor circuitry. For example, the processing flow pattern and its processing phases are learned, for example based on an artificial neural network, during several executions of the LLM. For example, after inferring the processing flow pattern of the LLM it is stored with a specific signature. For example, the processing flow pattern may be identified and loaded from a database (for example storage circuitry 140) the storage. For example, the circuitry 130 may generate and/or store the processing flow pattern (i.e., generated a corresponding signature) corresponding to the type and/or implementation of the LLM.

In some examples, processor circuitry 130 may be configured to obtain a policy comprising predefined rules on allocating processing resources. For example, the policy may comprise predefined rules on allocating processing resources to at least one of the plurality of processor cores.

For example, the policies may be obtained via an API and/or a library which interacts with the processor circuitry 130. For example, the policies may comprise a command to never turn off AMX-ISA, or never use AMX-ISA, or never use AVX-512-ISA or the like. The policy may comprise a temporal or other conditional event attached to them, for example, if memory bandwidth exceeds a threshold X, then turn off AVX512, because memory bandwidth is bound and AVX-512 does not give any additional benefit. In some examples, the policy may comprise a statement to never run the processor circuitry with more than a predefined threshold of poer (Watts) or to never use a specific component such as cache or the like. Further, the library may be the means through which a LLM model being used may be specified.

In some examples, the processor circuitry 130 is configured to allocate the processing resources based on the obtained policy. For example, the processor circuitry 130 is configured to allocate the processing resources to the at least one of the plurality of processor cores based on the obtained policy.

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 7).

### Examples of LLM performance depending on hardware settings

The performance of different transformer based LLMs may be analyzed with regards to different settings of the processor circuitry executing the LLMs. The following measurements may be based on the Llama transformer based model from Facebook^{®}. However, these measurements are similar when carried out with other models, such as GPT* based models including GPT-J and ChatGLM.

**Fig. 2** illustrates a first token latency performance of an LLM executed by a processor circuitry with a different number of LLC ways. That is the bar chart 200 illustrates the measurement of sensitivity of the first token latency of the LLM dependent on a cache size of the processor circuitry (for example GNR-AP system with MCR (for high bandwidth)) executing the LLM. The bar chart 200 shows the first token latency for the LLM in milliseconds (ms) depending on the number of LLC cache ways used by the processor circuitry executing the LLM. It shows that the LLM executed with 16 LLC ways has a first token latency of 1780 ms; the LLM executed with 12 LLC ways has a first token latency of 1758 ms; the LLM executed with 8 LLC ways has a first token latency of 1738 ms; the LLM executed with 4 LLC ways has a first token latency of 1852 ms; the LLM executed with 2 LLC ways has a first token latency of 2064 ms; the LLM executed with 1 LLC ways has a first token latency of 3600 ms. That is as the number of cache ways is reduced from 16 down to 8 -no impact on performance can be seen. Further reductions in the number of cache ways to 4, and 2 ways incur performance impacts, with a significant performance impact while reducing down to 1 way. That means, that first token latency performance is moderately sensitive to processor circuitry cache size, and is in general, highly compute bound.

**Fig. 3** illustrates the average token latency performance of the LLM executed by the processor circuitry with a different number of LLC ways for a batch size of 1. The bar chart 300 shows the average token latency for the LLM in milliseconds (ms) depending on the number of LLC cache ways used by the processor circuitry executing the LLM. It shows that the LLM executed with 16 LLC ways has the average token latency of 48,77 ms; the LLM executed with 12 LLC ways has the average token latency of 49,02 ms; the LLM executed with 8 LLC ways has the average token latency of 49,09 ms; the LLM executed with 4 LLC ways has the average token latency of 48,75 ms; the LLM executed with 2 LLC ways has the average token latency of 48,58 ms; the LLM executed with 1 LLC ways has the average token latency of 48,49 ms. This shows that there is no performance sensitivity between the average token latency performance of the LLM executed by the processor circuitry with a different number of LLC ways for a batch size of 1.

**Fig. 4** illustrates the average token latency performance of the LLM executed by the processor circuitry with a different number of LLC ways for a batch size of 8. The bar chart 400 shows the average token latency for the LLM in milliseconds (ms) depending on the number of LLC cache ways used by the processor circuitry executing the LLM. It shows that the LLM executed with 16 LLC ways has the average token latency of 82,37 ms; the LLM executed with 12 LLC ways has the average token latency of 81,53 ms; the LLM executed with 8 LLC ways has the average token latency of 81,59 ms; the LLM executed with 4 LLC ways has the average token latency of 82,09 ms; the LLM executed with 2 LLC ways has the average token latency of 84, 70 ms; the LLM executed with 1 LLC ways has the average token latency of 48,49 ms. This shows that there is performance sensitivity no performance sensitivity between the average token latency performance of the LLM executed by the processor circuitry with LLC ways down to 2 ways, and minimal (3%) performance impact when reducing down to 1 way.

That is the average token latency (performance) is almost completely insensitive to CPU cache size and is mainly memory bandwidth bound.

**Fig. 5** illustrates power expenditure of an LLM. Code table 500 shows various functions performed by the processor circuits during the execution of the LLM and the corresponding execution time required for these functions. The ISA-AMX instructions 502 take up a lot of time during execution. In cases where the bottleneck is memory bandwidth, or thread imbalance with threads waiting - expending platform power executing ISA-AMX instructions or power LLC ways is wasteful. Instead, the techniques as described in this disclosure redirect platform power to execute straggler threads' cores at higher speeds, improve uncore CHA, memory controller speeds and/or IO die speeds in cases where CXL is used for bandwidth expansion.

### Example of a technique as proposed in this disclosure

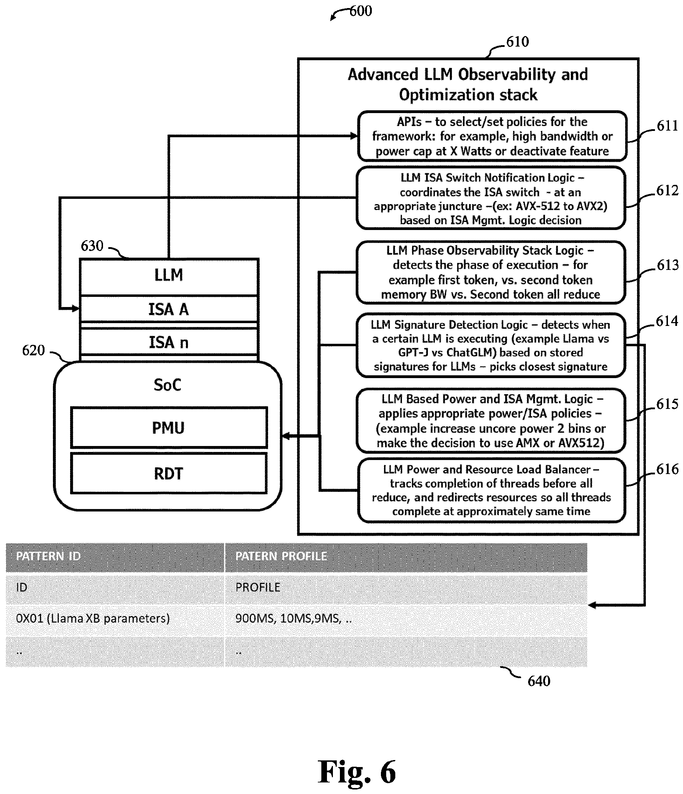

**Fig. 6** illustrates a block chart of an example of the proposed technique. The processor circuitry 620 (system on chip (SoC)) is identify the processing phase and allocating resources depending on the identified processing phase. For example, the processor circuitry 620 may also execute the LLM 630 and the resources are allocated to the processor circuitry 620. The processing circuitry 620 may carry out the steps and methods (i.e., functional blocks) 611 - 616 as included in the functional block 610 (advanced LLM observability and optimization stack).

The LLM signature detection logic 614 may be responsible to monitor the different resources of the processing circuitry 620 or of parts of it (for example a cache) to learn processing flow patterns of the LLM 630 running in the system 620. The LLM signature detection logic 614 may monitor, memory bandwidth, processor core utilization, and/or misses per kilo instructions. The LLM signature detection logic 614 may monitor the processing phases changes and the duration of each of the processing phases. After multiple monitoring cycles of processing phase changes, the LLM signature detection logic 614 may identify the processing pattern. Once the processing flow pattern is identified it, the processing circuitry 630 may check if the processing flow pattern is already identified or not. In negative case it will add it to the pattern a table Note that a pattern is defined by a set of intervals with certain resource utilizations. If the processing flow pattern is already known, it may be loaded from the table 640.

The LLM phase observability stack logic 613 may be responsible to monitor the various processing resources of the soc 620 and other computing system components in order to identify processing phase changes in the execution of the LLM 630 and also match the processing phase durations against processing phases of processing flow patterns identified by signature detection logic 614. Further, once the signature/processing flow pattern and/or the current processing phase is identified the LLM phase observability stack logic 613 may provide this information and/or the signature id that has been identified to the processing circuitry 620 and/or components connected to or included in the processing circuitry 620 such as the PMU. Further, the LLM phase observability stack logic 613 may notify the LLM isa switch logic 612 and/or the LLM power and ISA management logic 615 and/or the LLM power and resource load balancer of every change of a processing during execution of the LLM 630. The LLM phase observability stack logic 613 may continue to monitor the LLM 630 execution to identify any potential change on processing flow pattern.

The API and library unit 611 may provide a set of APIs to enable interaction with users and other systems with the processing circuitry 630 (and the computing system where it is included). The API and library unit 611 may activate or deactivate a provided feature. The API and library unit 611 may provide hints on potential processing flow patterns of the executed LLM 630 to the processing circuitry 620. For example, the processing circuitry 630 or the libraries may be aware on how specific processing flow patterns may look like based on pervious analysis and may be able to identify and/or register them. Therefore, in this case there may be no need to use the signature detection logic614. A processing flow pattern may be defined by a set of processing phases, for example, with a duration of the processing phase and/or the type of the processing phase (which may provide demand for the various processing resources; may provide just the list of relevant processing resources; and/or is not specified type of processing phase). In some examples, the API and library unit 611 library may provide a set of APIs to interact the circuitry 630. For example, if a user wants to never turn off AMX, or never use AMX, or never use AVX-512 or the like, there needs to be a means to communicate this intent or policy hint or rule to the processing circuitry 630. These hints may have temporal or other conditional events attached to them (for example, if memory BW > X, then! AVX512 (don't use AVX-512), because one is memory bandwidth bound and AVX-512 does not give any additional milage). In addition, the API and library unit 611 may specify the LLM model being used (for example, if Llama is being used, one can specify usage of a pre-saved Llama profile/pattern explicitly via the API and library unit 611). The API and library unit 611 may provide a means for a user to communicate with the processing circuitry 630 to activate or deactivate a provided feature, specify a model, or a model pattern, with additional temporal or conditional.

The LLM power and ISA management logic 615 may be responsible to apply processing resource allocation (such as the power management) to the relevant components, tasks and/or resources for the current processing phase. The LLM power and ISA management logic 615 may be integrated into and/or build on top of existing mechanism such as Resource Direction Technology RDT or SpeedStep Technology (SST). The LLM power and ISA management logic 615 may identify the relevant processing resources for the current phase based on the current signature, processing phase and/or processing flow pattern. The LLM power and ISA management logic 615 may turn cache (such as LLC) off, for example put in deep power state, or power it of when the LLM 630 is in a processing phase where the cache, or parts of the cache, is not needed at all. For example, to put LLC in deep state it may need to flush and invalidate the different sets of the LLC. For example, it may be assumed in this regard, that that in this case the LLM is fully utilizing cache components associated with the processing cores. Some API may be provided to allow the processing circuitry 630 to provide this input to avoid messing with other workloads. For example, the LLM power and ISA management logic 615 applies appropriate power/ISA policies that may be suggested by the LLM power and resource load balancer 616. The LLM power and ISA management logic 615 may also considers user input or user specified rules via the as API and library unit 611 as an override while deciding if the policies recommended by the LLM power and resource load balancer 616 should be executed. The LLM power and ISA management logic 615 may hook into BMC/HW and may be able to apply policy changes. It may also provide telemetry for closed loop monitoring and corrective actions in conjunction with the LLM power and resource load balancer 616 (for example: uncore frequency could not be increased as specified, next set of policy decisions need to be made based on this).

For example, a signature is specific to an LLM (such as Llama, GPT-J, and ChatGLM). A "signature" may be generated and stored for each LLM, which may possible because different LLMs have different algorithmic flows, for example, Llama does all reduce per layer differently from GPT-J etc. It may be beneficial to store and recognize these signatures because the decision making for example, reduce power to uncore during first token, or do not use AMX while executing second token has some specificity with regards to performance mileage and impact, for each LLM, and so recognizing the LLM that is executing may be important. In many cases, this may be specified in advance (for example from the libraries), and signature detection may not be needed. However, in cases where a model is just deployed, or a new model is deployed, collecting a signature and matching it against known signatures for a match, or closest match, can shape better policy making in the other modules.

The LLM power and resource load balancer 616 may be responsible to balance power and other resources within token generating and processing by the LLM 630, to have all the various threads balanced so they finish at the same time. The LLM power and resource load balancer 616 may track threads associated to same generated token. For example, applications may notify to the libraries the mapping of token and threads. For example, token threads may provide mile markers to notify progress to the software stack. For example, LLM power and resource load balancer 616 may use existing processing resource allocation schemes to do the resource allocation and/or to balance the progress of the threads. In some examples RDT and/or SST for power management may be used. For example, LLM power and resource load balancer 616 may track completion of threads before all reduce, and redirects resources so all threads complete at approximately same time. A challenge with LLMs on may be an imbalance between processor cores and threads as described above. All the threads need to reach a synchronization point (all reduce) before forward progress can be made. If some threads complete before others, the other threads have to idle while waiting (TPAUSE has been shown to be taking up a non-trivial amount of time in our experiments). The LLM power and resource load balancer 616 may track time to completion for each thread and may provide policy recommendations to ensure load is balanced - for example a policy may be to speed up N cores and slowdown M cores, or to not waste power executing AMX ISA while software is memory bandwidth bound (very common problem).

The LLM power and ISA management logic 615 and the LLM power and resource load balancer 616 may also be implemented as a single functional block.

Further, a compiler, compiler runtime and binaries, for example included and executed by processor circuitry 630, may be adapted in order to implement the proposed technique. The compiler may generate binaries with exposed synchronization points at which alternate execution paths can be pursued, for example, if the decision from the processing circuitry 630 is to switch from AVX-512 to AVX2 ISA, this alternate execution path needs to be pursued from a given synchronization point. The compile may provide multi-version binaries that use CPUID as a means to determine execution paths, for example, we have one SAP HANA binary that executes AVX-512 code on processors that support it, and non-AVX-512 code on other processor circuitries. The proposed technique may require capabilities the decision making based on hints from the processing circuitry 630 at finer granularity.

Further, in some examples, at scale, for example in a data center or a distributed fleet of devices, learnings (as federated learning) gathered by the different servers/devices may be shared to have all this information required for different LLM architectures, parameter counts, etc. (i.e., different characteristics) and the corresponding BKM/actions to take/patterns, immediately available for all participants, with no need for recalculation in case similar nodes already learned about a specific LLM type. For example, by keeping metrics per type of server/device, new patterns may be continuously tried in order to new ways to enhance the execution of the LLM, and once a better result is found, that is shared with the network.

The technique as proposed in this disclosure and in Fig. 6 provides new binary implementations for the LLM 630 in order to allow switching across different ISAs (ISA A,..., ISA n) with different properties depending on the type of token using the core function. The technique as proposed in this disclosure and as proposed in Fig. 6 further provides new monitoring elements that are aware on how the LLM 630 behaves and predicts and/or identifies processing phases that the LLM 630 may behave over time (different LLMs may have different signatures and new LLM may change the paradigm). Further, the technique as proposed in this disclosure and in Fig. 6 provides new power and resource managements schemes build on top of the existing mechanism (such as Resource Director Technology (RDT), and Performance Monitoring Unit (PMU)) to distribute resources according to the token type generated by the LLM 630.

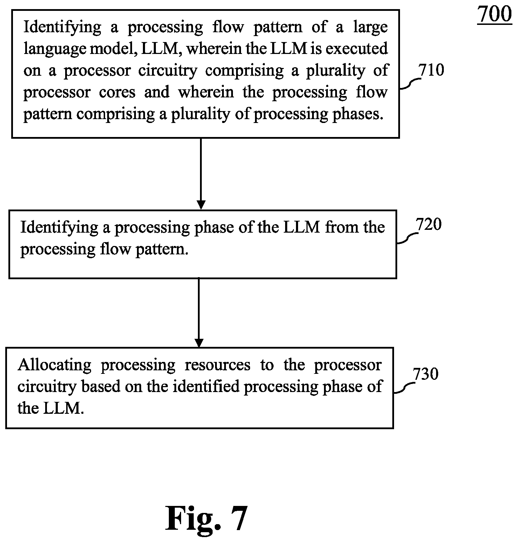

Further details and aspects are mentioned in connection with the examples described above or below. The example shown in Fig. 6 may include one or more optional additional features corresponding to one or more aspects mentioned in connection with the proposed concept or one or more examples described above (e.g., Figs. 1 to 5) or below (e.g., Fig. 7).

**Fig. 7** illustrates a flowchart of an example of a method 700. The method 700 may, for instance, be performed by an apparatus as described herein, such as apparatus 100. The method 700 comprises identifying 710 a processing flow pattern of a large language model, LLM. The LLM is executed on a processor circuitry comprising a plurality of processor cores. The processing flow pattern comprising a plurality of processing phases. The method 700 further comprises identifying 720 a processing phase of the LLM from the processing flow pattern. The method 700 further comprises allocating 730 processing resources to the processor circuitry based on the identified processing phase of the LLM.

More details and aspects of the method 700 are explained in connection with the proposed technique or one or more examples described above, e.g., with reference to Figs. 1 and 6. The method 700 may comprise one or more additional optional features corresponding to one or more aspects of the proposed technique, or one or more examples described.

In the following, some examples of the proposed concept are presented:
An example (e.g., example 1) relates to an apparatus comprising interface circuitry, machine-readable instructions and processor circuitry to execute the machine-readable instructions to identify a processing flow pattern of a large language model, LLM, wherein the LLM is executed on a processor circuitry comprising a plurality of processor cores and wherein the processing flow pattern comprising a plurality of processing phases, identify a processing phase of the LLM from the processing flow pattern, and allocate processing resources to the processor circuitry based on the identified processing phase of the LLM.

Another example (e.g., example 2) relates to a previous example (e.g., example 1) or to any other example, further comprising that the processor circuitry is to execute the machine-readable instructions to identify one or more processor cores of the plurality of processor cores executing one or more threads, wherein the one or more threads are associated with a particular token generated by the LLM.

Another example (e.g., example 3) relates to a previous example (e.g., example 2) or to any other example, further comprising that the processor circuitry is to execute the machine-readable instructions to re-allocate processing resources to the identified one or more processor cores to balance a progress of the one or more threads.

Another example (e.g., example 4) relates to a previous example (e.g., one of the examples 1 to 3) or to any other example, further comprising that a token is at least one of a piece of text, a word, a part of a word, generated by the LLM.

Another example (e.g., example 5) relates to a previous example (e.g., one of the examples 1 or 4) or to any other example, further comprising that the processing phase is at least one of a processing phase of generating a first token by the LLM, a processing phase of generating a second token by the LLM, a processing phase with a memory bandwidth exceeding a predefined threshold, a processing phase of all reduce, a processing phase of data sharing.

Another example (e.g., example 6) relates to a previous example (e.g., one of the examples 1 to 5) or to any other example, further comprising that the processor circuitry is to execute the machine-readable instructions to switch an instruction set architecture, ISA, based on the identified processing phase of the LLM.

Another example (e.g., example 7) relates to a previous example (e.g., one of the examples 1 to 6) or to any other example, further comprising that the processor circuitry is to execute the machine-readable instructions to re-allocate processing resources with regards to one or more processor cores of the processor circuitry, to a memory controller of the processor circuitry, a cache controller of processor circuitry and/or an I/O die based on the identified processing phase.

Another example (e.g., example 8) relates to a previous example (e.g., one of the examples 1 to 7) or to any other example, further comprising that the processor circuitry is to execute the machine-readable instructions to turn off at least a portion of a cache of the processor circuitry based on the processing phase of the LLM.

Another example (e.g., example 9) relates to a previous example (e.g., one of the examples 1 or 8) or to any other example, further comprising that the processing phases are determined based on a duration and/or processing resources utilization.

Another example (e.g., example 10) relates to a previous example (e.g., one of the examples 1 to 9) or to any other example, further comprising that the processor circuitry is to execute the machine-readable instructions to infer the processing flow pattern of the LLM based on processing resources utilization.

Another example (e.g., example 11) relates to a previous example (e.g., one of the examples 1 to 10) or to any other example, further comprising that the processor circuitry is to execute the machine-readable instructions to obtain a policy comprising predefined rules on allocating processing resources.

Another example (e.g., example 12) relates to a previous example (e.g., example 11) or to any other example, further comprising that the processor circuitry is to execute the machine-readable instructions to allocate the processing resources to the at least one of the plurality of processor cores based on the obtained policy.

An example (e.g., example 12) relates to a method comprising identifying a processing flow pattern of a large language model, LLM, wherein the LLM is executed on a processor circuitry comprising a plurality of processor cores and wherein the processing flow pattern comprising a plurality of processing phases, identifying a processing phase of the LLM from the processing flow pattern, and allocate processing resources to the processor circuitry based on the identified processing phase of the LLM.

Another example (e.g., example 13) relates to a previous example (e.g., example 12) or to any other example, further comprising identifying one or more processor cores of the plurality of processor cores executing one or more threads, wherein the one or more threads are associated with a particular token generated by the LLM.

Another example (e.g., example 14) relates to a previous example (e.g., example 13), further comprising re-allocating processing resources to the identified one or more processor cores to balance a progress of the one or more threads.

Another example (e.g., example 15) relates to a previous example (e.g., one of the examples 12 to 14) or to any other example, further comprising that a token is at least one of a piece of text, a word, a part of a word, generated by the LLM.

Another example (e.g., example 16) relates to a previous example (e.g., one of the examples 12 or 15) or to any other example, further comprising that the processing phase is at least one of a processing phase of generating a first token by the LLM, a processing phase of generating a second token by the LLM, a processing phase with a memory bandwidth exceeding a predefined threshold, a processing phase of all reduce, a processing phase of data sharing.

Another example (e.g., example 17) relates to a previous example (e.g., one of the examples 12 to 16) or to any other example, further comprising switching an instruction set architecture, ISA, based on the identified processing phase of the LLM.

Another example (e.g., example 18) relates to a previous example (e.g., one of the examples 12 to 17) or to any other example, further comprising re-allocating processing resources with regards to one or more processor cores of the processor circuitry, to a memory controller of the processor circuitry, a cache controller of processor circuitry and/or an I/O die based on the identified processing phase.

Another example (e.g., example 19) relates to a previous example (e.g., one of the examples 12 to 18) or to any other example, further comprising turning off at least a portion of a cache, of the processor circuitry based on the processing phase of the LLM.

Another example (e.g., example 20) relates to a previous example (e.g., one of the examples 12 or 19) or to any other example, further comprising that the processing phases are determined based on a duration and/or processing resources utilization.

Another example (e.g., example 21) relates to a previous example (e.g., one of the examples 12 to 20) or to any other example, further comprising inferring the processing flow pattern of the LLM based on processing resources utilization.

Another example (e.g., example 22) relates to further obtaining a policy comprising predefined rules on allocating processing resources.

Another example (e.g., example 23) relates to a previous example (e.g., example 22) or to any other example, further comprising allocating the processing resources to the at least one of the plurality of processor cores based on the obtained policy.

An example (e.g., example 24) relates to an apparatus comprising processor circuitry configured to identify a processing flow pattern of a large language model, LLM, wherein the LLM is executed on a processor circuitry comprising a plurality of processor cores and wherein the processing flow pattern comprising a plurality of processing phases, identify a processing phase of the LLM from the processing flow pattern, and allocate processing resources to the processor circuitry based on the identified processing phase of the LLM.

An example (e.g., example 25) relates to a device comprising means for processing for identifying a processing flow pattern of a large language model, LLM, wherein the LLM is executed on a processor circuitry comprising a plurality of processor cores and wherein the processing flow pattern comprising a plurality of processing phases, identifying a processing phase of the LLM from the processing flow pattern, and allocating processing resources to the processor circuitry based on the identified processing phase of the LLM.

Another example (e.g., example 26) relates to a non-transitory machine-readable storage medium including program code, when executed, to cause a machine to perform the method of any of examples 12 to 23.

Another example (e.g., example 27) relates to a computer program having a program code for performing the method of any one of example 12 to 23 when the computer program is executed on a computer, a processor, or a programmable hardware component.

Another example (e.g., example 28) relates to a machine-readable storage including machine readable instructions, when executed, to implement a method or realize an apparatus as described in any pending example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus comprising processor circuitry configured to:
identify a processing flow pattern of a large language model, LLM, wherein the LLM is executed on a processor circuitry comprising a plurality of processor cores and wherein the processing flow pattern comprising a plurality of processing phases;
identify a processing phase of the LLM from the processing flow pattern; and
allocate processing resources to the processor circuitry based on the identified processing phase of the LLM.

2. The apparatus according to claim 1, wherein the processor circuitry is further configured to identify one or more processor cores of the plurality of processor cores executing one or more threads, wherein the one or more threads are associated with a particular token generated by the LLM.

3. The apparatus according to claim 2, wherein the processor circuitry is further configured to re-allocate processing resources to the identified one or more processor cores to balance a progress of the one or more threads.

4. The apparatus according to any one of claims 1 to 3, wherein the processing phase is at least one of a processing phase of generating a first token by the LLM, a processing phase of generating a second token by the LLM, a processing phase with a memory bandwidth exceeding a predefined threshold, a processing phase of all reduce, a processing phase of data sharing.

5. The apparatus according to any one of claims 1 to 4, wherein the processor circuitry is further configured to switch an instruction set architecture, ISA, based on the identified processing phase of the LLM.

6. The apparatus according to any one of claims 1 to 5, wherein the processor circuitry is further configured to re-allocate processing resources with regards to one or more processor cores of the processor circuitry, to a memory controller of the processor circuitry, a cache controller of processor circuitry and/or an I/O die based on the identified processing phase.

7. The apparatus according to any one of claims 1 to 6, wherein the processor circuitry is further configured to turn off at least a portion of a cache of the processor circuitry based on the processing phase of the LLM.

8. The apparatus according to any one of claims 1 to 7, wherein the processing phases are determined based on a duration and/or processing resources utilization.

9. The apparatus according to any one of claims 1 to 8, wherein the processor circuitry is further configured to infer the processing flow pattern of the LLM based on processing resources utilization.

10. The apparatus according to any one of claims 1 to 9, wherein the processor circuitry is further configured to obtain a policy comprising predefined rules on allocating processing resources.

11. The apparatus according to claim 10, wherein the processor circuitry is further configured to allocate the processing resources to the at least one of the plurality of processor cores based on the obtained policy.

12. A method comprising:
identifying a processing flow pattern of a large language model, LLM, wherein the LLM is executed on a processor circuitry comprising a plurality of processor cores and wherein the processing flow pattern comprising a plurality of processing phases;
identifying a processing phase of the LLM from the processing flow pattern; and
allocate processing resources to the processor circuitry based on the identified processing phase of the LLM.

13. The method according to claim 12, further comprising identifying one or more processor cores of the plurality of processor cores executing one or more threads, wherein the one or more threads are associated with a particular token generated by the LLM.

14. The method according to claim 13, further comprising re-allocating processing resources to the identified one or more processor cores to balance a progress of the one or more threads.

15. A non-transitory machine-readable storage medium including program code, when executed, to cause a machine to perform the method of any one of claims 12 to 14.
